# EUROPÄISCHE PATENTSCHRIFT

(11) **EP 4 230 886 B1**
(45) Veröffentlichungstag und Bekanntmachung des Hinweises auf die Patenterteilung: **29.04.2026**
(21) Anmeldenummer: 23154142.6
(22) Anmeldetag: 31.01.2023
(51) Int. Cl.: F16B 37/08

(54) **SYSTEM ZUR BEFESTIGUNG EINER SANITÄRARMATUR AN EINE TRAGSTRUKTUR**
SYSTEM FOR FIXING A SANITARY FITTING TO A SUPPORT STRUCTURE
SYSTÈME DE FIXATION D'UNE ARMATURE SANITAIRE À UNE STRUCTURE PORTEUSE

(30) Priorität: 16.02.2022 DE 102022103649
(43) Veröffentlichungstag der Anmeldung: 23.08.2023
(73) Patentinhaber: Grohe AG, 58675 Hemer (DE)
(72) Erfinder: MUEHLING, Felix, 58710 Menden (DE); SCHLUETER, Matthias, 44289 Dortmund (DE); Keiter, Hans Dieter, 58708 Menden (DE)

(56) Entgegenhaltungen:
- EP-A1- 3 786 374
- AU-A1- 2013 203 844
- US-A1- 2014 182 708
- US-B1- 10 428 496

## Beschreibung

Die vorliegende Erfindung betrifft ein System zur Befestigung einer Sanitärarmatur an eine Tragstruktur und ein Verfahren zum Befestigen einer Sanitärarmatur an eine Tragstruktur.

Sanitärarmaturen dienen an beispielsweise Spülbecken, Waschbecken, Bidets, Badewannen und/oder Duschen der bedarfsgerechten Bereitstellung einer Flüssigkeit, insbesondere Wasser. Hierzu können Sanitärarmaturen ein Armaturengehäuse mit einem Auslauf für die Flüssigkeit aufweisen. Das Armaturengehäuse der Sanitärarmatur ist an einer Tragstruktur, beispielsweise einer Arbeitsplatte oder einem Spül- bzw. Waschbecken, befestigbar. Oftmals ergeben sich bei Sanitärarmaturen jedoch schwierige Befestigungsbedingungen. Denn der Befestigungsraum rund um die Arbeitsplatte oder dem Spül- bzw. Waschbecken ist üblicherweise nur erschwert zugänglich und bietet nur wenig Platz, insbesondere um die Sanitärarmatur mit der Hand und/oder mit Werkzeugen zu montieren.

Zur vereinfachten Befestigung von Sanitärarmaturen an eine Tragstruktur sind Befestigungsmuttern bekannt, beispielsweise aus US 8,231,318 B2, die händisch oder mit konventionellen Werkzeugen montierbar sind. Die bekannten Befestigungsmuttern benötigen jedoch einen vergleichsweise großen Befestigungsraum, da die Hand des Monteurs bzw. die konventionellen Montagewerkzeuge direkt an der Befestigungsmutter zu platzieren sind. Weiter ist aus EP 3 786 374 A1 eine Befestigungsmutter zur vereinfachten Befestigung von Sanitärarmaturen an einer Tragstruktur bekannt, die allerdings einen Aufbau hat, der einen vergleichweise großen Befestigungsraum erfordert.

Der vorliegenden Erfindung liegt daher die Aufgabe zugrunde, die voranstehend erläuterte Problematik zumindest teilweise zu lösen und insbesondere ein System zur Befestigung einer Sanitärarmatur an eine Tragstruktur sowie ein Verfahren zum Befestigen einer Sanitärarmatur an eine Tragstruktur anzugeben, um eine noch einfachere Befestigung und Montage in einem schwer zugänglichen und vergleichsweise kleinen Befestigungsraum zu ermöglichen.

Die hier zugrundeliegende Aufgabe wird gelöst durch ein System zur Befestigung einer Sanitärarmatur an eine Tragstruktur mit den Merkmalen des Patentanspruchs 1 und ein Verfahren zum Befestigen einer Sanitärarmatur an eine Tragstruktur mit den Merkmalen des Patentanspruchs 10. Vorteilhafte Weiterbildungen ergeben sich jeweils aus den Unteransprüchen.

Es wird ein System zur Befestigung einer Sanitärarmatur an eine Tragstruktur vorgeschlagen, umfassend eine zweiteilige Befestigungsmutter und ein Montagewerkzeug zur Montage der Befestigungsmutter, wobei das Montagewerkzeug rohrförmig ausgebildet ist und an einem axialen Ende eine Durchmesseraufweitung zur Herstellung einer lösbaren, formschlüssigen Verbindung mit der Befestigungsmutter aufweist. Das Montagewerkzeug dient zur Montage der Befestigungsmutter an der Sanitärarmatur.

Angaben wie "axial" bzw. "Längs-", "radial" bzw. "Quer-" und "zirkumferenziell" bzw. "Umfangs-" beziehen sich auf die Dreh- und Längsachse der zweiteiligen Befestigungsmutter, die aufgrund der jeweils koaxialen Anordnung im Montagezustand bzw. im Zusammenbau der Dreh- und Längsachse des rohrförmig ausgebildeten Montagewerkzeugs sowie der Längsachse des Teils der Sanitärarmatur, mit dem die Befestigungsmutter verbindbar ist, entspricht.

Die Befestigungsmutter dient dazu, die Tragstruktur zwischen der Sanitärarmatur und der Befestigungsmutter zu klemmen und so eine zwischen einer Kontaktfläche der Sanitärarmatur und einer Kontaktfläche der Tragstruktur wirkende Normalkraft zu erzeugen. Mit anderen Worten dient die Befestigungsmutter zur Herstellung einer Kraftschlussverbindung zwischen der Sanitärarmatur und der Tragstruktur. Diese Kraftschlussverbindung ist herstellbar, indem die Befestigungsmutter, die formschlüssig mit der Sanitärarmatur verbindbar ist, insbesondere über eine Schraubverbindung, eine Normalkraft auf eine Kontaktfläche der Sanitärarmatur und auf eine Kontaktfläche der Tragstruktur bewirkt. Die Befestigungsmutter ist insbesondere auf ein Außengewinde des Armaturenschafts der Sanitärarmatur aufschraubbar bzw. anziehbar.

Zu Montagezwecken kann das rohrförmig ausgebildete Montagewerkzeug des erfindungsgemäßen Systems in die zu befestigende Sanitärarmatur hineinführende Leitungen, insbesondere Schläuche und/oder Kabel, sowie aus der zu befestigenden Sanitärarmatur herausführende Leitungen, insbesondere Schläuche und/oder Kabel, aufnehmen. Mit anderen Worten können solche Schläuche und/oder Kabel während der Montage bzw. zum Zweck der Montage in das rohrförmig ausgebildete Montagewerkzeug und die auf das Montagewerkzeug lösbar gesteckte Befestigungsmutter eingefädelt bzw. hindurchgeführt werden, sodass diese Schläuche und/oder Kabel innerhalb des rohrförmig ausgebildeten Montagewerkzeugs und der Befestigungsmutter angeordnet sind. Dies hat den Vorteil, dass die Leitungen die Montagearbeiten nicht irritieren bzw. behindern bzw. stören und die Leitungen keinen zusätzlichen Raum in dem in der Praxis oftmals ohnehin kleinen Befestigungsraum beanspruchen. Dadurch ist die Befestigung einer Sanitärarmatur an eine Tragstruktur und die Montage der Befestigungsmutter in einem schwer zugänglichen und vergleichsweise kleinen Befestigungsraum effektiv vereinfacht. Durch das Zusammenwirken des rohrförmig ausgebildeten Montagewerkzeugs mit der zweiteiligen Befestigungsmutter erlaubt das erfindungsgemäße System eine Verkleinerung des Durchmessers der Befestigungsmutter, da die Befestigungsmutter nicht mehr mit der bloßen Hand oder mit relativ großen konventionellen Werkzeugen angezogen werden muss. Dies ermöglicht eine einfache Befestigung und Montage in einem schwer zugänglichen und vergleichsweise kleinen Befestigungsraum.

Das rohrförmig ausgebildete Montagewerkzeug kann aus demselben Material wie die Befestigungsmutter oder Teile der Befestigungsmutter hergestellt sein, insbesondere aus Kunststoff. Dies vereinfacht die Herstellung des erfindungsgemäßen Systems. Das rohrförmig ausgebildete Montagewerkzeug kann aus einem elastischen Material hergestellt sein. Dies ermöglicht es, das Montagewerkzeug in einem gewissen Maß zu biegen und somit leichte Winkelunterschiede zwischen der Dreh- und Längsachse der Befestigungsmutter und der Dreh- und Längsachse des Montagewerkzeugs auszugleichen, wodurch die Montage weiter vereinfacht ist.

Das rohrförmig ausgebildete Montagewerkzeug kann mit zumindest einem weiteren rohrförmig ausgebildeten Montagewerkzeug stapelbar bzw. ineinander steckbar ausgeführt sein. Insbesondere weist dazu das rohrförmig ausgebildete Montagewerkzeug an einem ersten axialen Ende die Durchmesseraufweitung und an einem zweiten axialen Ende, das dem ersten axialen Ende gegenüber angeordnet ist, keine Durchmesseraufweitung auf. Vorzugsweise weist das rohrförmig ausgebildete Montagewerkzeug an einem ersten axialen Ende einen definierten Innendurchmesser und an einem zweiten axialen Ende einen definierten Außendurchmesser auf, wobei der definierte Innendurchmesser und der definierte Außendurchmesser gemeinsam eine Spiel-, Übergangs- oder Presspassung bilden. Das heißt, dass zumindest zwei der rohrförmig ausgebildeten Montagewerkzeuge ineinander steckbar sind, sodass eine Spiel-, Übergangs- oder Presspassung zwischen den ineinander gesteckten, rohrförmig ausgebildeten Montagewerkzeugen entsteht. Das Stapeln hat den Vorteil, dass die axiale Gesamtlänge der so gestapelten Montagewerkzeuge verlängerbar ist, sodass die Befestigungsmutter auch an schwer zugänglichen Stellen fest- bzw. anziehbar ist.

Nach einer vorteilhaften Ausgestaltung weist die Durchmesseraufweitung des rohrförmig ausgebildeten Montagewerkzeugs eine ringförmige Stirnfläche zur Übertragung einer in Richtung der Tragstruktur, insbesondere in Richtung der Längsachse des Montagewerkzeugs, auf die Befestigungsmutter wirkenden Kraft, insbesondere Axialkraft, auf. Dies ermöglicht es, während der Montage selbst im Falle eines schwer zugänglichen und vergleichsweise kleinen Befestigungsraums durch Druck auf das Montagewerkzeug einen Druck auf die Befestigungsmutter auszuüben, sodass die Befestigung und Montage sich weiter vereinfachen.

Nach einer weiter vorteilhaften Ausgestaltung weist die Durchmesseraufweitung des rohrförmig ausgebildeten Montagewerkzeugs eine Innenverzahnung zur Übertragung eines auf die Befestigungsmutter wirkenden Drehmoments auf. Dies ermöglicht es, während der Montage selbst im Falle eines schwer zugänglichen und vergleichsweise kleinen Befestigungsraums durch Drehen des Montagewerkzeugs ein Drehmoment auf die Befestigungsmutter auszuüben. Dies vereinfacht die Befestigung und Montage weiter.

Nach einer weiter vorteilhaften Ausgestaltung weist die Durchmesseraufweitung eine Innenwölbung, das heißt eine innenseitige Wölbung bzw. Erhebung, zur Herstellung einer kraftschlüssigen Verbindung zwischen dem Montagewerkzeug und der Befestigungsmutter auf. Die Innenwölbung der Durchmesseraufweitung ist insbesondere punkt- oder ringförmig ausgebildet. Durch diese Innenwölbung ist das Spiel zwischen der Durchmesseraufweitung des Montagewerkzeugs und der Befestigungsmutter verringert, sodass eine Klemmung, insbesondere eine Presspassung, entsteht.

Nach einer weiter vorteilhaften Ausgestaltung weist das rohrförmig ausgebildete Montagewerkzeug an dem der Tragstruktur abwendbaren axialen Ende eine Durchbrechung bzw. ein Loch auf. Dies ermöglicht es, ein anderweitiges Werkzeug, zum Beispiel einen Schraubendreher, durch die Durchbrechung zu stecken, um den Hebelarm zur Aufbringung des Drehmoments zu vergrößern, um ein größeres Drehmoment zu erzeugen. Dies vereinfacht die Befestigung und Montage weiter.

Erfindungsgemäß umfasst die zweiteilige Befestigungsmutter eine äußere, insbesondere zylinderförmigen, Hülse und einen inneren, insbesondere zylinderförmigen, Ring, wobei die Hülse und der Ring koaxial zueinander angeordnet sind und die Hülse den Ring umfangsseitig umschließt, wobei die Hülse und der Ring drehfest miteinander verbunden sind, wobei der Ring ein Innengewinde und eine Außenwölbung, das heißt eine außenseitge Wölbung bzw. Erhebung, mit einer der Tragstruktur zuwendbaren, abgewinkelten Flanke aufweist, wobei die Hülse eine

Innenwölbung, das heißt eine innenseitge Wölbung bzw. Erhebung, mit einer der Tragstruktur abwendbaren, abgewinkelten Flanke aufweist, wobei die der Tragstruktur zuwendbare Flanke des Rings und die der Tragstruktur abwendbare Flanke der Hülse aufeinander gleitbar ausgebildet sind, wobei die Hülse an der der Tragstruktur abwendbaren Seite eine zylinderförmige, sich in Axialrichtung über den Ring, insbesondere über das der Tragstruktur abwendbare, axiale Ende des Rings, hinweg erstreckende Anformung aufweist.

Die Hülse und der Ring sind derart zueinander angeordnet, dass ihre jeweiligen Längsachsen aufeinanderfallen. Die Hülse ist derart ausgestaltet, dass sie den Ring umfangsseitig umschließt. Die der Tragstruktur zuwendbare Flanke des Rings und die der Tragstruktur abwendbare Flanke der Hülse gleiten aufeinander, wenn der Ring auf das Außengewinde des Armaturenschafts der Sanitärarmatur aufgeschraubt wird.

Die Hülse kann an ihrem der Tragstruktur zuwendbaren, axialen Ende eine erste Kontaktfläche zur Herstellung eines Flächenkontakts bzw. einer Flächenberührung zwischen der Hülse und der Tragstruktur aufweisen und an ihrem der Tragstruktur abwendbaren, axialen Ende eine zweite Kontaktfläche zur Herstellung eines Flächenkontakts bzw. einer Flächenberührung zwischen der Hülse und dem rohrförmig ausgebildeten Montagewerkzeugs aufweisen, insbesondere zwischen der zweiten Kontaktfläche der Hülse und der ringförmigen Stirnfläche des rohrförmig ausgebildeten Montagewerkzeugs.

Die Hülse und der Ring sind drehfest miteinander verbunden, sodass durch eine Drehmomentbeaufschlagung der Hülse der Ring und somit die Befestigungsmutter insgesamt auf das Außengewinde des Armaturenschafts der Sanitärarmatur aufschraubbar ist.

Die Hülse und/oder der Ring der Befestigungsmutter können bzw. kann aus demselben Material wie das rohrförmig ausgebildete Montagewerkzeug oder Teile davon hergestellt sein, insbesondere aus Kunststoff. Dies vereinfacht die Herstellung der erfindungsgemäßen Befestigungsmutter.

Nach einer vorteilhaften Ausgestaltung weist die Anformung der Hülse eine, insbesondere ringförmige, Stirnfläche zur Übertragung einer in Richtung der Tragstruktur, insbesondere in Richtung der Längsachse des Montagewerkzeugs, auf die Befestigungsmutter wirkenden Kraft, insbesondere Axialkraft, auf. Dies ermöglicht es, während der Montage selbst im Falle eines schwer zugänglichen und vergleichsweise kleinen Befestigungsraums Druck auf die Befestigungsmutter auszuüben, sodass die Befestigung und Montage sich weiter vereinfachen.

Nach einer weiter vorteilhaften Ausgestaltung weist die Anformung der Hülse eine Außenverzahnung zur Übertragung eines auf die Befestigungsmutter wirkenden Drehmoments auf. Dies ermöglicht es, während der Montage selbst im Falle eines schwer zugänglichen und vergleichsweise kleinen Befestigungsraums ein Drehmoment auf die Befestigungsmutter auszuüben. Dies vereinfacht die Befestigung und Montage weiter.

Nach einer weiter vorteilhaften Ausgestaltung ist die Außenverzahnung der Anformung eine Kerbverzahnung, Keilverzahnung oder Evolventenverzahnung. Dies ermöglicht einen Formschluss, der besonders gut für schwer zugängliche und vergleichsweise kleine Befestigungsräume geeignet ist.

Nach einer weiter vorteilhaften Ausgestaltung weist der Ring sich in Axialrichtung erstreckende, in Umfangsrichtung durch Aussparungen voneinander getrennte Segmente bzw. Stege auf, wobei das Innengewinde des Rings an den jeweiligen Innenseiten der Segmente ausgebildet ist. Die Außenwölbung des Rings kann an den jeweiligen Außenseiten der Segmente ausgebildet sein. Die Segmente können an dem der Tragstruktur zuwendbaren, axialen Ende des Rings mit dem Ring fest verbunden sein und an dem der Tragstruktur abwendbaren, axialen Ende des Rings freischwingend sein. Die Segmente sind insbesondere elastisch bzw. federnd ausgebildet.

Dies ermöglicht es, die Befestigungsmutter im Sinne einer Schnellmontage in Axialrichtung auf das Außengewinde des Armaturenschafts der Sanitärarmatur eine bestimme Länge weit zu drücken bzw. schieben. Die Befestigungsmutter kann auf diese Weise so weit auf die Sanitärarmatur gedrückt werden bis der Flächenkontakt zwischen der Hülse und der Tragstruktur beinahe erreicht ist. Ein zeitaufwändiges Aufschrauben der Befestigungsmutter auf die Sanitärarmatur über jeden einzelnen Gewindegang erübrigt sich dadurch.

Weiterhin wird ein Verfahren zum Befestigen einer Sanitärarmatur an eine Tragstruktur vorgeschlagen, umfassend folgende Schritte: Bereitstellen des erfindungsgemäßen Systems mit der erfindungsgemäßen zweiteiligen Befestigungsmutter, Verbinden der Befestigungsmutter mit dem Montagewerkzeug des Systems, Aufschieben der Befestigungsmutter auf die Sanitärarmatur durch Drücken des Montagewerkzeugs, Aufschrauben der Befestigungsmutter auf die Sanitärarmatur durch Drehen des Montagewerkzeugs.

Leitungen, insbesondere Schläuche und/oder Kabel, können während der Montage bzw. zum Zweck der Montage in das rohrförmig ausgebildete Montagewerkzeug und die auf das Montagewerkzeug lösbar gesteckte Befestigungsmutter eingefädelt bzw. hindurchgeführt werden.

Die im Zusammenhang mit dem erfindungsgemäßen System erörterten Merkmale, Details, Wirkungen und vorteilhaften Ausgestaltungen können entsprechend auch bei dem erfindungsgemäßen Verfahren verwirklicht sein und umgekehrt. Insoweit wird im Hinblick auf das erfindungsgemäße System vollumfänglich auf die Ausführungen bezüglich des erfindungsgemäßen Verfahrens zur näheren Charakterisierung der Merkmale vollumfänglich Bezug genommen und umgekehrt.

Die vorliegende Erfindung wird nachfolgend anhand der Figuren näher erläutert. Darin sind vorteilhafte Ausführungsformen der Erfindung gezeigt, wobei die Erfindung nicht auf diese vorteilhafte Ausführungsformen beschränkt ist. Gleiche Bauteile sind in den Figuren stets mit den gleichen Bezugszeichen versehen und sind daher grundsätzlich nur einmal benannt bzw. erwähnt. Es zeigen im Einzelnen
- Figur 1: eine Ausführungsform des erfindungsgemäßen Systems mit einer Sanitärarmatur und einer Tragstruktur in einer schematischen Längsschnittdarstellung,
- Figur 2: die Ausführungsformen aus Figur 1 in einer schematischen Längsschnittdetaildarstellung,
- Figur 3: die Ausführungsformen aus Figuren 1 und 2 mit einer Sanitärarmatur und einer Tragstruktur sowie eine Ausführungsform des erfindungsgemäßen Verfahrens in einer schematischen Seitendarstellung.

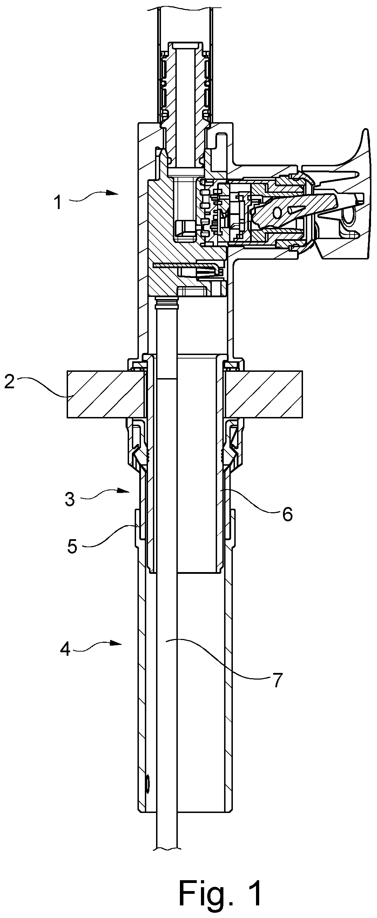

Figur 1 zeigt eine Ausführungsform des erfindungsgemäßen Systems in einer schematischen Längsschnittdarstellung. Das System dient zur Befestigung einer Sanitärarmatur 1 an eine Tragstruktur 2, umfassend eine zweiteilige Befestigungsmutter 3 und ein Montagewerkzeug 4 zur Montage der Befestigungsmutter 3, wobei das Montagewerkzeug 4 rohrförmig ausgebildet ist und an dem der Tragstruktur 2 zugewandten, axialen Ende eine Durchmesseraufweitung 5 zur Herstellung einer lösbaren, formschlüssigen Verbindung mit der Befestigungsmutter 3 aufweist. Die Sanitärarmatur 1 weist einen Armaturenschaft 6 mit Außengewinde auf und Leitungen 7, die aus der Sanitärarmatur 1, in die von der Tragstruktur 2 abgewandte Richtung, herausragen bzw. verlaufen bzw. verlegt sind.

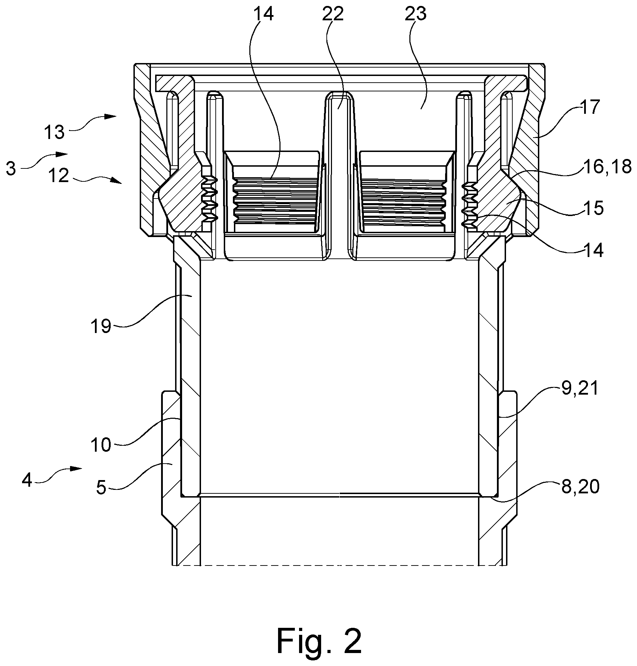

Figur 2 zeigt die Ausführungsformen aus Figur 1 in einer schematischen Längsschnittdetaildarstellung, wobei der Übersichtlichkeit halber das Montagewerkzeug 4 lediglich abgeschnitten dargestellt ist.

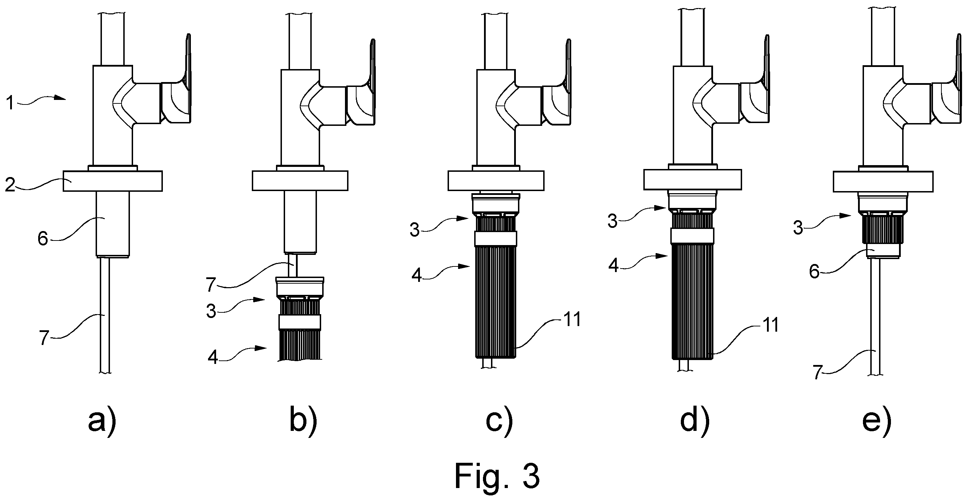

Die Durchmesseraufweitung 5 weist an dem der Tragstruktur 2 abgewandten axialen Ende eine ringförmige Stirnfläche 8 zur Übertragung einer in Richtung der Tragstruktur 2, auf die Befestigungsmutter 3 wirkenden Axialkraft auf. Außerdem weist die Durchmesseraufweitung 5 eine Innenverzahnung 9 zur Übertragung eines auf die Befestigungsmutter 3 wirkenden Drehmoments auf. Das Drehmoment kann durch Drehen des Montagewerkzeugs 4 erzeugt werden. Zudem weist die Durchmesseraufweitung 5 eine Innenwölbung 10 zur kraftschlüssigen Verbindung zwischen dem Montagewerkzeug 4 und der Befestigungsmutter 3 auf. Die Innenwölbung 10 bewirkt eine zusätzliche Klemmung zwischen der Durchmesseraufweitung 5 des Montagewerkzeugs 4 und der Befestigungsmutter 3. Die Innenwölbung 10 ist punktförmig ausgebildet und umfasst drei in Umfangsrichtung äquidistant angeordnete Einzelwölbungen. Das Montagewerkzeug 4 weist an dem der Tragstruktur 2 abgewandten axialen Ende eine Durchbrechung 11 (siehe Figur 3), durch die zum Beispiel ein Schraubendreher gesteckt werden kann, um ein größeres, auf die Befestigungsmutter 3 wirkendes Drehmoment erzeugen zu können, auf.

Die Befestigungsmutter 3 ist zweiteilig und umfasst eine äußere Hülse 12 und einen inneren Ring 13, wobei die Hülse 12 und der Ring 13 koaxial zueinander angeordnet sind und die Hülse 12 den Ring 13 umfangsseitig umschließt, wobei die Hülse 12 und der Ring 13 drehfest miteinander verbunden sind. Der Ring 13 weist ein Innengewinde 14 und eine Außenwölbung 15 mit einer der Tragstruktur 2 zugewandten, abgewinkelten Flanke 16 auf, wobei die Hülse 12 eine Innenwölbung 17 mit einer der Tragstruktur 2 abgewandten, abgewinkelten Flanke 18 aufweist, wobei die der Tragstruktur 2 zugewandte Flanke 16 des Rings 13 und die der Tragstruktur 2 abgewandte Flanke 18 der Hülse 12 aufeinander gleitbar ausgebildet sind. Die Hülse 12 weist außerdem an der der Tragstruktur 2 abgewandten Seite eine zylinderförmige, sich in Axialrichtung über den Ring 13 hinweg erstreckende Anformung 19 auf.

Die Anformung 19 weist eine Stirnfläche 20 zur Übertragung einer in Richtung der Tragstruktur 2 wirkenden Kraft und eine Außenverzahnung 21 zur Übertragung eines Drehmoments auf. Der Ring 13 weist sich in Axialrichtung erstreckende, in Umfangsrichtung durch Aussparungen 22 voneinander getrennte Segmente 23 auf, wobei das Innengewinde 14 des Rings 13 an den jeweiligen Innenseiten der Segmente 23 ausgebildet ist.

Figur 3 zeigt die Ausführungsformen aus Figuren 1 und 2 mit einer Sanitärarmatur 1 und einer Tragstruktur 2 sowie eine Ausführungsform des erfindungsgemäßen Verfahrens in einer schematischen Seitendarstellung.

Figur 3 a) zeigt die Sanitärarmatur 1 und die Tragstruktur 2, wobei der Armaturenschaft 6 der Sanitärarmatur 1 durch eine Öffnung der Tragstruktur 2 hindurchgeführt ist. Die Sanitärarmatur 1 ist in diesem Zustand noch nicht an der Tragstruktur 2 befestigt. Leitungen 7 der Sanitärarmatur 1 ragen aus dieser heraus.

Figur 3 b) zeigt die Befestigungsmutter 3 und das Montagewerkzeug 4, wobei die Befestigungsmutter 3 auf bzw. in das Montagewerkzeug 4 lösbar gesteckt ist. Zum Zweck der Montage werden die Leitungen 7 der Sanitärarmatur 1 durch die Befestigungsmutter 3 und das Montagewerkzeug 4 hindurchgefädelt.

Figur 3 c) zeigt die Befestigungsmutter 3 und das Montagewerkzeug 4 in einem Zustand nachdem die Befestigungsmutter 3 über das Außengewinde des Armaturenschafts 6 geschoben worden ist, indem die Befestigungsmutter 3 mit Hilfe des Montagewerkzeugs 4 in Richtung des Tragstruktur 2 gedrückt wurde, und bevor der Flächenkontakt zwischen der Befestigungsmutter 3 und der Tragstruktur 2 hergestellt worden ist.

Figur 3 d) zeigt die Befestigungsmutter 3 und das Montagewerkzeug 4 in einem Zustand nachdem der Flächenkontakt zwischen der Befestigungsmutter 3 und der Tragstruktur 2 hergestellt worden ist und bevor die Befestigungsmutter 2 durch Drehen des Montagewerkzeugs 3 angezogen worden ist.

Figur 3 e) zeigt die Befestigungsmutter 3 in einem Zustand nachdem die Befestigungsmutter 2 durch Drehen des Montagewerkzeugs 3 angezogen worden ist und das Montagewerkzeug 3 anschließend abgezogen worden ist.

### Bezugszeichenliste

- 1: Sanitärarmatur
- 2: Tragstruktur
- 3: Befestigungsmutter
- 4: Montagewerkzeug
- 5: Durchmesseraufweitung
- 6: Armaturenschaft
- 7: Leitung
- 8: Stirnfläche der Durchmesseraufweitung
- 9: Innenverzahnung
- 10: Innenwölbung der Durchmesseraufweitung
- 11: Durchbrechung
- 12: Hülse
- 13: Ring
- 14: Innengewinde
- 15: Außenwölbung
- 16: Flanke des Rings
- 17: Innenwölbung der Hülse
- 18: Flanke der Hülse
- 19: Anformung
- 20: Stirnfläche der Anformung
- 21: Außenverzahnung
- 22: Aussparung
- 23: Segment

## Patentansprüche

1. System zur Befestigung einer Sanitärarmatur (1) an eine Tragstruktur (2), umfassend eine zweiteilige Befestigungsmutter (3) und ein Montagewerkzeug (4) zur Montage der Befestigungsmutter (3), wobei die Befestigungsmutter (3) eine äußere Hülse (12) und einen inneren Ring (13) umfasst, wobei die Hülse (12) und der Ring (13) koaxial zueinander angeordnet sind und die Hülse (12) den Ring (13) umfangsseitig umschließt, wobei die Hülse (12) und der Ring (13) drehfest miteinander verbunden sind, wobei der Ring (13) ein Innengewinde (14) und eine Außenwölbung (15) mit einer der Tragstruktur (2) zuwendbaren, abgewinkelten Flanke (16) aufweist, wobei die Hülse (12) eine Innenwölbung (17) mit einer der Tragstruktur (2) abwendbaren, abgewinkelten Flanke (18) aufweist, wobei die der Tragstruktur (2) zuwendbare Flanke (16) des Rings (13) und die der Tragstruktur (2) abwendbare Flanke (18) der Hülse (12) aufeinander gleitbar ausgebildet sind, wobei die Hülse (12) an der der Tragstruktur (2) abwendbaren Seite eine zylinderförmige, sich in Axialrichtung über den Ring (13) hinweg erstreckende Anformung (19) aufweist, wobei das Montagewerkzeug (4) rohrförmig ausgebildet ist und an einem axialen Ende eine Durchmesseraufweitung (5) zur Herstellung einer lösbaren, formschlüssigen Verbindung mit der Befestigungsmutter (3) aufweist.

2. System nach vorgenanntem Anspruch, wobei die Durchmesseraufweitung (5) eine ringförmige Stirnfläche (8) zur Übertragung einer in Richtung der Tragstruktur (2), auf die Befestigungsmutter (3) wirkenden Kraft aufweist.

3. System nach einem der vorgenannten Ansprüche, wobei die Durchmesseraufweitung (5) eine Innenverzahnung (9) zur Übertragung eines auf die Befestigungsmutter (3) wirkenden Drehmoments aufweist.

4. System nach einem der vorgenannten Ansprüche, wobei die Durchmesseraufweitung (5) eine Innenwölbung (10) zur Herstellung einer kraftschlüssigen Verbindung zwischen dem Montagewerkzeug (4) und der Befestigungsmutter (3) aufweist.

5. System nach einem der vorgenannten Ansprüche, wobei das Montagewerkzeug (4) an dem der Tragstruktur (2) abwendbaren axialen Ende eine Durchbrechung (11) aufweist.

6. System nach einem der vorgenannten Ansprüche, wobei die Anformung (19) eine Stirnfläche (20) zur Übertragung einer in Richtung der Tragstruktur (2) wirkenden Kraft aufweist.

7. System nach einem der vorgenannten Ansprüche, wobei die Anformung (19) eine Außenverzahnung (21) zur Übertragung eines Drehmoments aufweist.

8. System nach Anspruch 7, wobei die Außenverzahnung (21) der Anformung (19) eine Kerbverzahnung, Keilverzahnung oder Evolventenverzahnung ist.

9. System nach einem der vorgenannten Ansprüche, wobei der Ring (13) sich in Axialrichtung erstreckende, in Umfangsrichtung durch Aussparungen (22) voneinander getrennte Segmente (23) aufweist, wobei das Innengewinde (14) des Rings (13) an den jeweiligen Innenseiten der Segmente (23) ausgebildet ist.

10. Verfahren zum Befestigen einer Sanitärarmatur (1) an eine Tragstruktur (2), umfassend folgende Schritte:
- Bereitstellen eines Systems nach einem der vorgenannten Ansprüche,
- Verbinden der Befestigungsmutter (3) mit dem Montagewerkzeug (4) des Systems,
- Aufschieben der Befestigungsmutter (3) auf die Sanitärarmatur (1) durch Drücken des Montagewerkzeugs (4),
- Aufschrauben der Befestigungsmutter (3) auf die Sanitärarmatur (1) durch Drehen des Montagewerkzeugs (4).

## Claims

1. A system for fixing a sanitary fitting (1) to a support structure (2), comprising a two-piece fastening nut (3) and an installation tool (4) for mounting the fastening nut (3), wherein the fastening nut (3) comprises an outer sleeve (12) and an inner ring (13), wherein the sleeve (12) and the ring (13) are arranged coaxially with respect to one another and the sleeve (12) encloses the ring (13) circumferentially, wherein the sleeve (12) and the ring (13) are connected to each other in a rotationally fixed manner, wherein the ring (13) has an internal thread (14) and an external bulge (15) with an angled flank (16) that can be turned towards the support structure (2), wherein the sleeve (12) has an inner bulge (17) with an angled flank (18) that can be turned away from the support structure (2), wherein the flank (16) of the ring (13) that can be turned towards the support structure (2) and the flank (18) of the sleeve (12) that can be turned away from the support structure (2) are designed to be slidable on one another, wherein the sleeve (12), on the side that can be turned away from the support structure (2), has a cylindrical molded-on protrusion (19) extending in the axial direction across the ring (13), wherein the installation tool (4) is tubular in shape and has a diameter expansion (5) at one axial end for establishing a releasable, positive connection with the fastening nut (3).

2. The system according to the preceding claim, wherein the diameter expansion (5) has an annular end face (8) for transmitting a force acting onto the fastening nut (3) in the direction of the support structure (2).

3. The system according to any one of the preceding claims, wherein the diameter expansion (5) has an internal toothing (9) for transmitting a torque acting on the fastening nut (3).

4. The system according to any one of the preceding claims, wherein the diameter expansion (5) has an internal bulge (10) for establishing a non-positive connection between the installation tool (4) and the fastening nut (3).

5. The system according to any one of the preceding claims, wherein the installation tool (4) has an aperture (11) at the axial end which can be turned away from the support structure (2).

6. The system according to any one of the preceding claims, wherein the molded-on protrusion (19) has an end face (20) for transmitting a force acting in the direction of the support structure (2).

7. The system according to any one of the preceding claims, wherein the molded-on protrusion (19) has an external toothing (21) for transmitting a torque.

8. The system according to claim 7, wherein the external toothing (21) of the molded-on protrusion (19) is a serration, spline or involute toothing.

9. The system according to any one of the preceding claims, wherein the ring (13) has segments (23) that extend in the axial direction and are separated from one another in the circumferential direction by recesses (22), wherein the internal thread (14) of the ring (13) is formed on the respective inner sides of the segments (23) .

10. A method for fixing a sanitary fitting (1) to a support structure (2), comprising the following steps:
- providing a system according to any one of the preceding claims,
- connecting the fastening nut (3) to the installation tool (4) of the system,
- sliding the fastening nut (3) onto the sanitary fitting (1) by pressing the assembly tool (4),
- screwing the fastening nut (3) onto the sanitary fitting (1) by turning the installation tool (4).

## Revendications

1. Système, destiné à la fixation d'une robinetterie sanitaire (1) sur une structure porteuse (2), comprenant un écrou de fixation (3) en deux parties et un outil de montage (4) pour le montage de l'écrou de fixation (3), l'écrou de fixation (3) comprenant une douille (12) extérieure et une bague (13) intérieure, la douille (12) et la bague (13) étant placées de manière coaxiale l'une par rapport à l'autre et la douille (12) entourant la bague (13) sur sa circonférence, la douille (12) et la bague (13) étant reliées l'une avec l'autre de manière solidaire en rotation, la bague (13) comportant un taraudage (14) et une voussure extérieure (15), pourvue d'un flanc (16) coudé, susceptible d'être tourné vers la structure porteuse (2), la douille (12) comportant une voussure intérieure (17), pourvue d'un flanc (18) coudé, susceptible d'être tourné en opposition à la structure porteuse (2), le flanc (16) de la bague (13) susceptible d'être tourné vers la structure porteuse (2) et le flanc (18) de la douille (12) susceptible d'être tourné en opposition à la structure porteuse (2) étant conçus pour pouvoir coulisser l'un sur l'autre, sur la face susceptible d'être tournée en opposition à la structure porteuse (2), la douille (12) comportant un moulage (19) de forme cylindrique, s'étendant au-delà de la bague (13) dans la direction axiale, l'outil de montage (4) étant conçu de forme tubulaire et sur un extrémité axiale, comportant un élargissement de diamètre (5), pour l'établissement d'une liaison par complémentarité de forme avec l'écrou de fixation (3).

2. Système selon la revendication précédente, l'élargissement de diamètre (5) comportant une face frontale (8) de forme annulaire, pour la transmission d'une force agissant sur l'écrou de fixation (3) dans la direction de la structure porteuse (2).

3. Système selon l'une quelconque des revendications précédemment citées, l'élargissement de diamètre (5) comportant une denture intérieure (9), pour la transmission d'un couple de rotation agissant sur l'écrou de fixation (3).

4. Système selon l'une quelconque des revendications précédemment citées, l'élargissement de diamètre (5) comportant une voussure intérieure (10), pour l'établissement d'une liaison par complémentarité de force entre l'outil de montage (4) et l'écrou de fixation (3).

5. Système selon l'une quelconque des revendications précédemment citées, sur l'extrémité axiale susceptible d'être tournée en opposition à la structure porteuse (2), l'outil de montage (4) comportant un ajour (11).

6. Système selon l'une quelconque des revendications précédemment citées, le moulage (19) comportant une face frontale (20) pour la transmission d'une force agissant dans la direction de la structure porteuse (2).

7. Système selon l'une quelconque des revendications précédemment citées, le moulage (19) comportant une denture extérieure (21) pour la transmission d'un couple de rotation.

8. Système selon la revendication 7, la denture extérieure (21) du moulage (19) étant une denture à crénelage, une denture à cannelures ou une denture à développante.

9. Système selon l'une quelconque des revendications précédemment citées, la bague (13) comportant des segments (23) s'étendant dans la direction axiale, séparés les uns des autres dans la direction circonférentielle par des encoches (22), le taraudage (14) de la bague (13) étant conçu sur les faces intérieures respectives des segments (23).

10. Procédé, destiné à la fixation d'une robinetterie sanitaire (1) sur une structure porteuse (2), comportant les étapes suivantes, consistant à :
- mettre à disposition un système selon l'une quelconque des revendications précédemment citées,
- relier l'écrou de fixation (3) avec l'outil de montage (4) du système,
- emboîter l'écrou de fixation (3) sur la robinetterie sanitaire (1), en poussant sur l'outil de montage (4).
